# EUROPEAN PATENT SPECIFICATION

(11) **EP 2 233 371 B1**
(45) Date of publication and mention of the grant of the patent: **21.08.2013**
(21) Application number: 08871202.1
(22) Date of filing: 10.12.2008
(51) Int. Cl.: B60R 21/26, B60R 21/217, B60R 21/2346

(54) **HEAD PROTECTION AIRBAG DEVICE**
AIRBAGVORRICHTUNG FÜR KOPFSCHUTZ
DISPOSITIF DE COUSSIN GONFLABLE POUR PROTECTION DE TÊTE

(30) Priority: 24.01.2008 JP 2008014161
(43) Date of publication of application: 29.09.2010
(73) Proprietor: Autoliv Development AB, 447 83 Vårgårda (SE)
(72) Inventor: ARIMA, Takashi, Yokohama-shi Kanagawa 222-0033 (JP); ARAKAWA, Hironori, Yokohama-shi Kanagawa 222-0033 (JP); OHBA, Yoshihiro, Yokohama-shi Kanagawa 222-0033 (JP)
(74) Representative: Müller Verweyen
(86) International application number: PCT/JP2008/072419
(87) International publication number: WO 2009/093389

(56) References cited:
- WO-A1-02/079008
- WO-A1-2006/120970
- WO-A2-2006/092226
- DE-U1-202005 017 267
- JP-A- 10 147 201
- JP-A- 2001 233 156
- JP-A- 2004 276 899
- JP-A- 2006 168 687
- JP-A- 2006 341 715
- JP-A- 2007 210 370
- US-A1- 2004 188 987

## Description

### TECHNICAL FIELD

The present invention relates to a head protecting air bag device (to be referred to hereafter as a curtain air bag device) in which a plurality of chambers deploy in curtain form when a vehicle is impacted from the side (to be referred to as a lateral collision hereafter), for example, thereby protecting the head of an occupant.

### BACKGROUND ART

It has become common for an automobile to be provided with a curtain air bag device in which a plurality of chambers are deployed in curtain form along a side door window when a heavy load acts on a vehicle body from the side of the vehicle, for example during a lateral collision. During a lateral collision or the like, the heads of occupants occupying front seats and rear seats can be protected effectively by the curtain air bag device. Document DE 20 2005 017 267 U1 discloses a head protecting airbag device according to the preamble of claim 1.

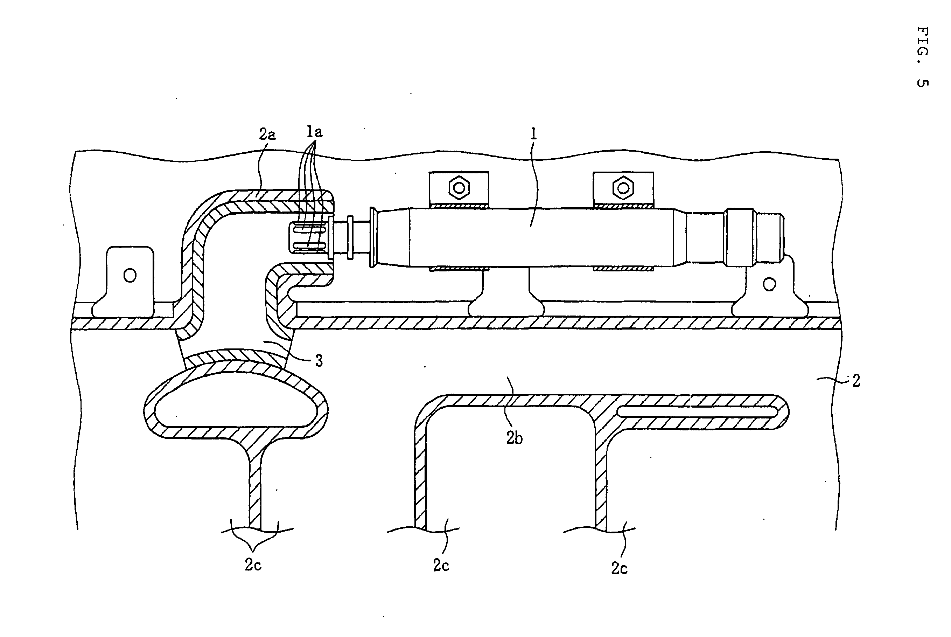

In a curtain air bag device, as shown in Fig. 5, a high-temperature/high-pressure gas ejected through gas ejection holes 1a of an inflator 1 is supplied from a connecting portion 2a of an air bag 2 to vertically elongated chambers 2c disposed in series via a duct 2b (Patent Document 1, for example) . Note that a reference numeral 3 in Fig. 5 denotes a fabric inner bag provided in the connecting portion 2a of the air bag 2. Patent Document 1: Japanese Patent Application Publication No. 2003-327070

Hence, in the curtain air bag device of Patent Document 1, the high-temperature/high-pressure gas ejected from the inflator is injected directly into the inner bag (a horizontal pipe part in Patent Document 1) of the air bag.

A part of the inner bag (a part opposing the gas ejection holes in the inflator) into which the high-temperature gas is directly injected may be damaged by the heat of the gas. Further, the grain of the fabric constituting the inner bag and the air bag may expand due to the high pressure of the gas such that the gas passes through the fabric, and as a result, the temperature of the passage portion may increase locally, causing damage.

### DISCLOSURE OF THE INVENTION

A problem to be solved by the present invention is that in an air bag in which an inner bag is simply provided in a connecting portion of the air bag, the inner bag, the air bag, and so on may be damaged by a high-temperature/high-pressure gas from an inflator.

A curtain air bag device according to the present invention has been designed from this viewpoint, and the present invention solves the problem described above by providing a protective band on a part of an inner bag that opposes gas ejection holes of an inflator when the inflator is attached to an air bag.

More specifically, a curtain air bag device according to the present invention is a head protecting air bag device as defined by claim 1*.*

In the curtain air bag device according to the present invention, the protective band provided on the inner surface of the part of the inner bag that opposes the gas ejection hole in the inflator when the inflator is attached to the air bag protects the inner air bag from damage caused by the high-temperature/high-pressure gas.

In the curtain air bag device according to the present invention, when an attachment position of the protective band relative to the inner bag moves, the inner bag and the air bag cannot be protected effectively. Therefore, the protective band is joined to the inner bag.

The protective band is made of a metal foil or a resin.

In the present invention, the protective band is provided on the inner surface of the part of the inner bag that opposes the gas ejection hole in the inflator when the inflator is attached to the air bag, and therefore the high-temperature/high-pressure gas can be received by the protective band. As a result, the inner bag and the air bag are not damaged by the high-temperature/high-pressure gas ejected by the inflator.

### BRIEF DESCRIPTION OF THE DRAWINGS

Fig. 1 is a view illustrating the main parts of a curtain air bag device according to the present invention;
Fig. 2 is an A-A sectional view of Fig. 1;
Fig. 3 is an illustrative view of an inner bag and a protective band provided in the curtain air bag device according to the present invention;
Fig. 4 is a perspective view showing an inflator attachment portion of the curtain air bag device according to the present invention, wherein Fig. 4(a) is an exploded perspective view and Fig. 4(b) is a perspective view showing an assembled state; and
Fig. 5 is a view illustrating the main parts of a conventional curtain air bag device.

### DESCRIPTION OF REFERENCE NUMERALS

- 1: inflator
- 1a: gas ejection hole
- 11: air bag
- 11a: connecting portion
- 11b: duct
- 11c: chamber
- 12: inner bag
- 15: protective band

### BEST MODE FOR CARRYING OUT THE INVENTION

When an inner bag is simply provided in a connecting portion of an air bag, the inner bag, the air bag, and so on may be damaged by a high-temperature/high-pressure gas generated by an inflator.

The present invention protects the inner bag from damage caused by the high-temperature/high-pressure gas by providing a protective band on a part of the inner bag that opposes gas ejection holes in the inflator when the inflator is attached to the air bag.

### Example

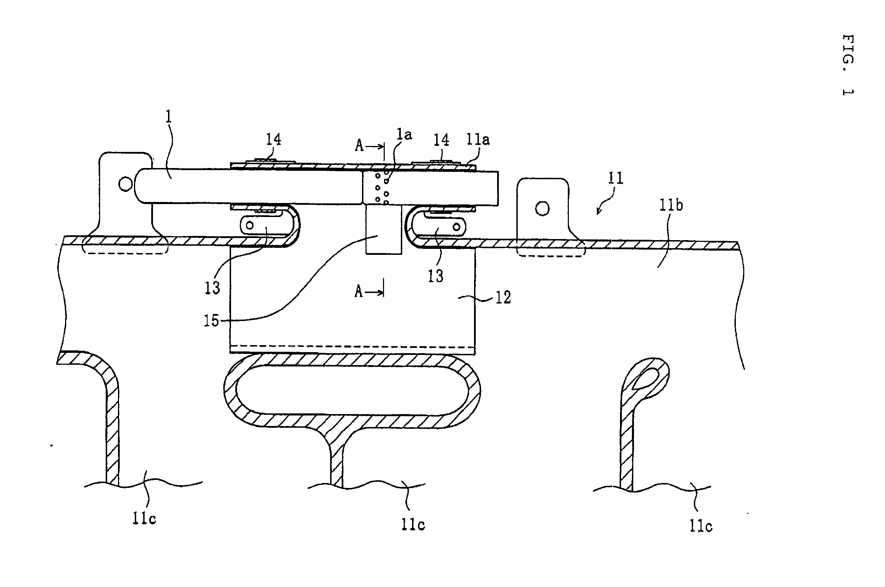

An example embodiment of the present invention will be described below using Figs. 1 to 4.

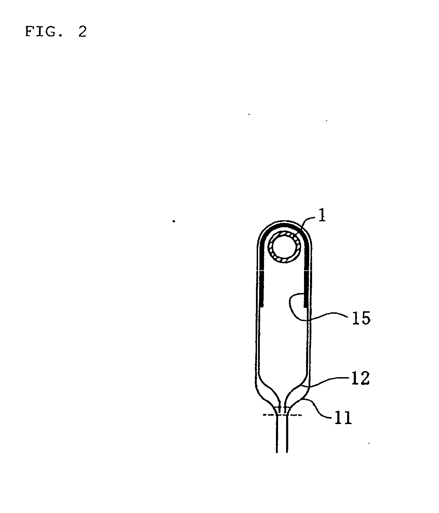

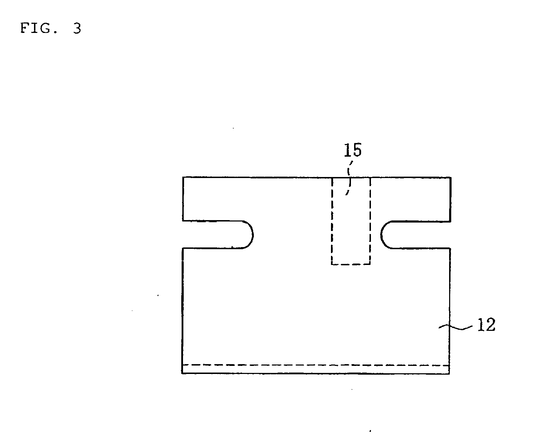

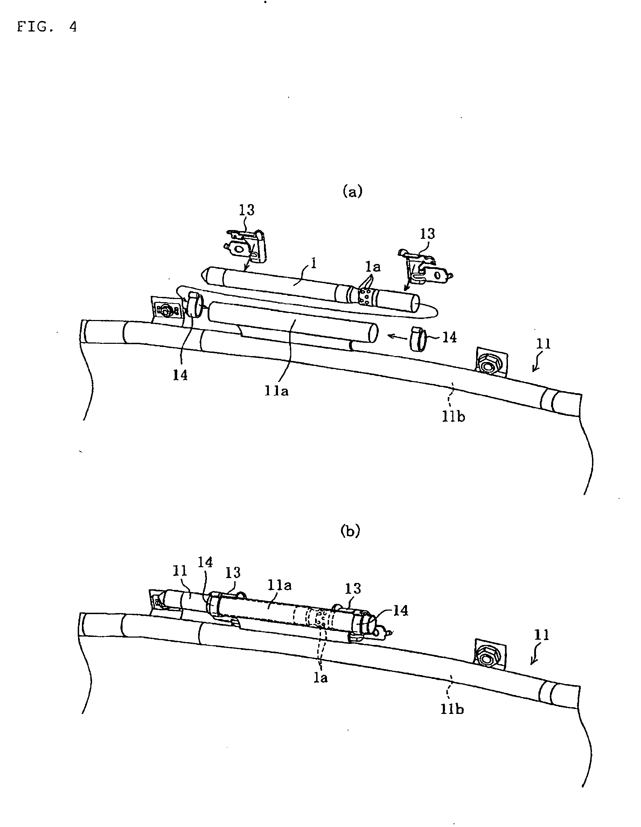

Fig. 1 is a view illustrating the main parts of a curtain air bag device according to the present invention. Fig. 2 is an A-A sectional view of Fig. 1. Fig. 3 is an illustrative view of an inner bag and a protective band provided in the curtain air bag device according to the present invention. Fig. 4 is a perspective view showing an inflator attachment portion of the curtain air bag device according to the present invention.

A reference numeral 11 denotes an air bag. In the air bag 11, a connecting portion 11a for an inflator 1, a duct 11b connected to the connecting portion 11a, and a plurality of vertically elongated chambers 11c disposed in series and in parallel and connected to the duct 11b are formed in a bag shape by spinning and weaving, for example.

A reference numeral 12 denotes a fabric inner bag. The inner bag 12 protects the air bag 11 from a gas ejected by the inflator 1 and rectifies the gas so that the gas reaches each chamber 11c from the duct 11b. The inner bag 12 is sewn to the connecting portion 11a, for example.

In the present invention, a protective band 15 made of a metal foil or a resin is joined via an adhesion to an inner surface of the inner bag 12 that opposes gas ejection holes 1a in the inflator 1 when the inflator 1, which is held by a bracket 13, is fixed to the air bag 11 by a ring 14.

In the curtain air bag device according to the present invention, having the constitution described above, the high-temperature/high-pressure gas ejected from the inflator 1 is received by the protective band 15.

Hence, a part of the inner bag 12 located close to the gas ejection holes 1a in the inflator 1 can be protected effectively. Furthermore, since the inner bag 12 is not damaged by the gas, improvements in the heat resistance and pressure resistance thereof are achieved, leading to a dramatic improvement in the strength of the inner bag 12 and the air bag 11.

Moreover, when the curtain air bag device is exposed to an abnormally high temperature during a fire or the like while the inflator 1 is inactive, the resin protective band 15 melts so that the gas ejection holes 1a in the inflator 1 are exposed to all directions.

Therefore, even if the inflator 1 is activated by the abnormally high temperature, the gas ejected from the inflator 1 is ejected in all directions. As a result, zero thrust is generated in the inflator 1, and safety can be assured.

The curtain air bag device described above is a preferred example of the present invention, and other embodiments may be implemented or executed using various methods. In the absence of specific limiting description in the specification of this application, the present invention is not limited to the shapes, sizes, constitutional arrangements and so on of the components illustrated in detail in the attached drawings.

For example, in the above example, description of a method for manufacturing the air bag in a bag shape by spinning and weaving is not provided. However, as long as the air bag can be manufactured in a bag shape by spinning and weaving, any method, for example a method disclosed in Japanese Utility Model Application Publication No. S50-145875 may be employed. Furthermore, instead of spinning and weaving, a fabric folded in two may be sewn into a bag shape.

When joining the air bag 11, the inner bag 12, and the protective band 15, adhesion is employed instead of sewing. Furthermore, the inner bag 12 need not be joined to the air bag 11.

### INDUSTRIAL APPLICABILITY

The curtain air bag device according to the present invention is disposed for use in an automobile, but similar effects can be obtained when the curtain air bag device is provided in a vehicle other than an automobile, such as an airplane or a ship.

## Claims

1. A head protecting air bag device comprising:
an inflator (1);
an air bag (11) constituted by a plurality of chambers that are deployed when a gas ejected from the inflator (1) is supplied thereto from a connecting portion (11a) via a duct (11b); and
an inner bag (12) provided in the connecting portion (11a) of the air bag (11),
wherein a protective band (15) is provided on an inner surface of a part of the inner bag (12) that opposes a gas ejection hole (1a) in the inflator (1) when the inflator (1) is attached to the air bag (11), **characterized in that** the protective band (15) is made of a metal foil or a resin which melts when the air bag is exposed to an abnormally high temperature, and
that the protective band (15) is joined to the inner bag (12) via an adhesion, so that an attachment position of the protective band relative to the inner bag does not move.

## Patentansprüche

1. Airbagvorrichtung für Kopfschutz, umfassend:
einen Gasgenerator (1);
einen Airbag (11), der aus einer Vielzahl von Kammern gebildet wird, die entfaltet werden, wenn ein Gas, das aus dem Gasgenerator (1) ausgestoßen wird, von einem Verbindungsabschnitt (11a) aus über einen Kanal (11b) dorthin zugeführt wird; und
einen inneren Sack (12), der in dem Verbindungsabschnitt (11 a) des Airbags (11) angeordnet ist,
wobei ein Schutzband (15) an einer Innenfläche eines Teils des inneren Sacks (12) angeordnet ist, das einem Gasausstoßloch (1a) in dem Gasgenerator (1) gegenüberliegt, wenn der Gasgenerator (1) an dem Airbag (11) befestigt ist, **dadurch gekennzeichnet,**
**dass** das Schutzband (15) aus einer Metallfolie oder einem Harz hergestellt ist, die bzw. das schmilzt, wenn der Airbag einer außergewöhnlich hohen Temperatur ausgesetzt ist, und
**dass** das Schutzband (15) mit dem inneren Sack (12) mittels Haftung verbunden ist, sodass sich eine Befestigungsposition des Schutzbands bezogen auf den inneren Sack nicht bewegt.

## Revendications

1. Dispositif de coussin gonflable pour protection de tête comprenant :
un générateur de gaz (1);
un coussin gonflable (11) constitué d'une pluralité de chambres qui sont déployées quand un gaz expulsé du générateur de gaz (1) est alimenté dans celles-ci depuis une portion de raccordement (11a) par l'intermédiaire d'une conduite (11b) ; et
un coussin intérieur (12) prévu dans la portion de raccordement (11 a) du coussin gonflable (11),
une bande protectrice (15) étant prévue sur une surface intérieure d'une partie du coussin intérieur (12) qui est opposée à un trou d'expulsion de gaz (1a) dans le générateur de gaz (1) quand le générateur de gaz (1) est relié au coussin gonflable (11), **c**aractérisé
en ce que la bande protectrice (15) est réalisée à partir d'une feuille de métal ou d'une résine qui fond quand le coussin gonflable est exposé à une température anormalement élevée, et
en ce que la bande protectrice (15) est liée au coussin intérieur (12) par adhérence, de sorte qu'une position de liaison de la bande protectrice par rapport au coussin intérieur ne se déplace pas.
